# EUROPÄISCHE PATENTSCHRIFT

(11) **EP 3 497 409 B1**
(45) Veröffentlichungstag und Bekanntmachung des Hinweises auf die Patenterteilung: **16.04.2025**
(21) Anmeldenummer: 17755093.6
(22) Anmeldetag: 08.08.2017
(51) Int. Cl.: G01D 5/353, G02B 6/02

(54) **VERFAHREN ZUR BESTIMMUNG DER KRÜMMUNG UND/ODER TORSION EINES LICHTWELLENLEITERS**
METHOD FOR DETERMINING THE CURVATURE AND/OR TORSION OF AN OPTICAL WAVEGUIDE
PROCÉDÉ PERMETTANT DE DÉTERMINER LA COURBURE ET/OU LA TORSION D'UN GUIDE D'ONDES OPTIQUES

(30) Priorität: 10.08.2016 DE 102016214887
(43) Veröffentlichungstag der Anmeldung: 19.06.2019
(73) Patentinhaber: Fraunhofer-Gesellschaft zur Förderung der angewandten Forschung e.V., 80686 München (DE)
(72) Erfinder: SCHADE, Wolfgang, 38644 Goslar (DE); ANGELMAHR, Martin, 69502 Hemsbach (DE); WALTERMANN, Christian, 38640 Goslar (DE)
(74) Vertreter: Friese Goeden Patentanwälte PartGmbB
(86) Internationale Anmeldenummer: PCT/EP2017/070006
(87) Internationale Veröffentlichungsnummer: WO 2018/029165

(56) Entgegenhaltungen:
- WO-A2-2014/026839
- JP-A- H11 218 450
- US-A1- 2006 215 976
- US-A1- 2007 230 861
- US-A1- 2007 297 712
- US-A1- 2010 166 358

## Beschreibung

Die Erfindung betrifft ein Verfahren zur Bestimmung der Krümmung und/oder Torsion eines Lichtwellenleiters eines faseroptischen Sensors.

Innerhalb von Einmoden- (single mode) als auch Vielmoden (multi mode) Lichtwellenleitern wird das Licht in definierten und mathematisch beschreibbaren Lichtmoden geführt. Die Lichtmoden beschreiben die Verteilung des elektromagnetischen Feldes des Lichtes (Lichtfeld oder Modenfeld) innerhalb des Lichtwellenleiters. Lichtwellenleiter sind z.B. Kerne in Glasfasern, laserprozessierte Strukturen in Gläsern oder auch lichtleitende Strukturen in Polymeren. Die Lichtmode eines einmodigen Wellenleiters zeichnet sich dadurch aus, dass in der Mitte des Lichtfeldes, also insbesondere im Zentrum des Faserkerns (Fiber Core), die Lichtintensität, d.h. die Intensität des Lichtfeldes, maximal ist und sich zu allen Seiten ähnlich einer Gausskurve in Radialrichtung nach außen verringert. Desgleichen verhält sich eine Überlagerung aus vielen möglichen Lichtmoden innerhalb eines Vielmodenwellenleiters.

Unter Krümmung des Lichtwellenleiters verlagert sich die Position der maximalen Lichtintensität innerhalb des Lichtwellenleiters in entgegengesetzter Richtung zu der Krümmung. Dieser Vorgang kann auch mathematisch beschrieben oder simuliert, d.h. berechnet, werden.

Bei einem Bragg-Gitter handelt es sich um einen Bereich einer periodischen Brechzahlmodulation im Material des Lichtwellenleiters. Die Periode der Brechzahlmodulation wird auch als Gitterkonstante bezeichnet und liegt hinsichtlich ihrer Größenordnung im Bereich der Wellenlänge des im Lichtwellenleiter zu leitenden Lichtes. Dieses Licht wird von dem Bragg-Gitter zumindest teilweise reflektiert, wobei die Intensität des reflektierten Lichtes insbesondere von dessen Wellenlänge, dem Auftreffwinkel auf das Bragg-Gitter und der Gitterkonstante des Bragg-Gitters abhängt.

In der DE 10 2014 211 918 A1 ist ein gattungsgemäßer faseroptischer Sensor offenbart, bei dem eines der Bragg-Gitter in einen zentralen Kern und weitere Bragg-Gitter in Faserkerne im Mantel eingebracht sind. Die weiteren Faserkerne erstrecken sich in Axialrichtung nur über kurze Teilbereiche des Lichtwellenleiters und leiten Licht aus dem Evaneszenzbereich des Lichtes im zentralen Kern zu den weiteren Bragg-Gittern ab. Ein derartiger Lichtwellenleiter ist aufwändig herzustellen. Mit diesem Sensor kann eine Torsionsbestimmung des Lichtwellenleiters vorgenommen werden, wobei das der Torsionsbestimmung zugrundeliegende Messprinzip abhängig von Wellenlängenänderungen des Lichtes im Lichtwellenleiter ist, welche aufgrund von Drehungen oder Temperaturänderungen der Gitterstruktur des Lichtwellenleiters auftreten. Demnach kann bei der Torsionsbestimmung keine gleichzeitige zusätzliche Erfassung von einer temperaturbedingten Dehnung des Lichtwellenleiters erfolgen.

Aus der US 2007/0230861 A1 ist eine optische Faser bekannt, die einen Kern und einen Mantel sowie mehrere voneinander verschiedene Bragg-Gitter aufweist, die an unterschiedlichen Stellen in der optischen Faser angeordnet sind. Allerdings beschreibt dieser Stand der Technik nicht, dass damit die Krümmung und/oder Torsion eines Lichtwellenleiters eines faseroptischen Sensors bestimmt wird.

Die DE 10 2005 030 753 A1 beschreibt einen optischen Dehnunsgsmessstreifen zur mehrachsigen Dehnungsmessung, der mindestens zwei geradlinige Lichtwellenleiterabschnitte mit jeweils einem Bragg-Gitter aufweist. Aus diesem Stand der Technik ist nicht bekannt, dass mindestens zwei Bragg-Gitter in einem Lichtwellenleiter vorliegen. Ferner wird in dieser Entgegenhaltung nicht beschrieben, dass der Dehnungsmessstreifen zur Bestimmung der Krümmung und/oder Torsion eines Lichtwellenleiters eines faseroptischen Sensors verwendet wird.

Weitere Verfahren zur Bestimmung einer Krümmung und/oder Torsion eines Lichtwellenleiters werden in US 2006/215976 A1, JP H11 218450 A, US 2010/166358 A1 sowie US 2007/297712 A1 beschrieben. WO 2014/026839 A2 beschreibt ein Verfahren zur Bestimmung mechanischer Spannungen eines Lichtwellenleiters.

Es ist bekannt, die Krümmung und/oder Torsion über eine Wellenlängenänderung von einzelnen Bragg-Gitter zu messen. Dabei kommt es zu einer Verschiebung der Wellenlänge von mehreren an verschiedenen Orten des Faserkerns vorliegenden Bragg-Gittern, sobald die Faser gekrümmt wird. Die Größe der Wellenlängenänderung bei einer bestimmten Krümmung hängt linear von dem Abstand der Gitterstruktur von der neutralen Achse der Faser (also typischerweise dem Zentrum des Faserkerns) ab. Die für mehrere Strukturen in einem

Faserkern (mit z.B. 4 µm Durchmesser)zu erwartende Änderung der Wellenlänge ist demnach um mehr als eine Größenordnung kleiner als die von Bragg-Gittern in Mehrkernfasern oder Wellenleitern im Mantel (mit beispielsweise mehr als 60 µm Durchmesser). Eine Wellenlängenauswertung aufgrund der winzigen Signaländerung ist selbst bei großen Krümmungen kaum möglich.

Eine Aufgabe der vorliegenden Erfindung ist es daher, ein Verfahren zur Bestimmung der Krümmung und/oder Torsion eines Lichtwellenleiters eines faseroptischen Sensors bereitzustellen, das die Nachteile des Standes der Technik verringert, wobei insbesondere eine vereinfachte, zuverlässige und verbesserte Messung der Krümmung und/oder Torsion ermöglicht werden soll.

Die Aufgabe wird erfindungsgemäß durch ein Verfahren nach Anspruch 1 gelöst. Vorteilhafte Weiterbildungen der Erfindung finden sich in den Unteransprüchen.

Mit dem erfindungsgemäßen Verfahren werden die Lichtintensitäten insbesondere von drei oder vier verschiedenen Bragg-Gittern, die sich an einem Ort befinden, gemessen anstatt wie im Stand der Technik die absoluten Wellenlängen. Neben einer deutlich höheren Messempfindlichkeit kann mit dem erfindungsgemäßen Verfahren die Messung der Wellenlänge als sensorischer Parameter zusätzlich erfolgen, um weiterhin die Temperatur und/oder die Dehnung der Faser über diese Messung der Wellenlänge zu bestimmen.

Für alle Einmoden-Wellenleiter kann die Intensitätsverteilung des geführten Lichtes in Wellenleitern eindeutig bestimmt werden. Bei einer Krümmung verlagert sich dieses Modenfeld, wie es nachfolgend noch ausführlich beschrieben werden wird. Da sich beim erfindungsgemäßen Verfahren die voneinander verschiedenen Bragg-Gitter an festen Positionen des Faserkerns befinden, verändern sich die Wechselwirkungen zwischen dem Modenfeld und den Bragg-Gittern. Aus insbesondere drei an einem Ort positionierte Bragg-Gitter kann unabhängig von den Wellenlängen auf die lokale Krümmung geschlossen werden. Durch den Vergleich der gemessenen Intensitäten ist es ferner möglich, dass das erfindungsgemäße Verfahren unabhängig von Verlustquellen entlang der Fasern durchgeführt wird.

Ein erfindungsgemäß verwendeter faseroptischer Sensor weist einen Lichtwellenleiter auf, der eine in einer Lichtaus-breitungsrichtung ausgerichtete Axialrichtung und eine senkrecht dazu ausgerichtete Radialrichtung ausbildet. Der Lichtwellenleiter weist einen zentral in Axialrichtung verlaufenden, sich zumindest im Wesentlichen über die gesamte Länge des Lichtwellenleiters erstreckenden Kern zur Leitung von Licht und einen, den Kern in Radialrichtung umgebenden Mantel (Ummantelung) auf. Unter im Wesentlichen über die ganze Länge erstreckend wird dabei verstanden, dass z.B. an einem Ende des Lichtwellenleiters ein Abschlussbereich vorgesehen sein kann, in den der Kern nicht hineinreicht. Es ist mindestens ein in Axialrichtung verlaufender Abschnitt des Lichtwellenleiters vorhanden, in den mindestens zwei Bragg-Gitter eingebracht sind. Die Bragg-Gitter sind dabei radial beabstandet, d.h. in unterschiedlichem Abstand und/oder unterschiedlicher Richtung zur Symmetrieachse des Querschnittes angeordnet.

Die mindestens zwei Bragg-Gitter sind in einer gemeinsamen, in Radialrichtung liegenden Querschnittsebene durch den Lichtwellenleiter angeordnet. Anders ausgedrückt überlappen sich die Bragg-Gitter in Axialrichtung mindestens teilweise. Das heißt, sie sind zwar radial räumlich beabstandet, in einer Projektion auf die zentrale Axialrichtung überlappt sich jedoch deren Länge.

Erfindungsgemäß sind die Bragg-Gitter in dem Kern und/oder auf der Grenze zwischen dem Kern und dem Mantel und/oder in einem inneren Randbereich des Mantels innerhalb eines Evaneszenzbereiches (Modenfeldrand) des Lichtes eingebracht. Als Evaneszenzbereich wird der Bereich außerhalb des Kerns im Mantel bezeichnet, in den das durch den Kern geleitete Licht aufgrund seiner Welleneigenschaft eintritt.

Derart ist ein optischer Sensor bereitgestellt, mit dem ein Verfahren zur Amplitudenauswertung von periodischen Indexmodulationen für Krümmungs- und 3D-Formerfassung des Lichtwellenleiters ermöglicht wird. Der erfindungsgemäß verwendete faseroptische Sensor basiert auf der Möglichkeit, mehrere, d.h. mindestens zwei, insbesondere drei oder vier Bereiche einer periodischen Brechzahlmodulation, also Bragg-Gitter innerhalb gleicher Abschnitte eines Lichtwellenleiters zu prozessieren, wobei zumindest einige der Bragg-Gitter unterschiedliche Gitterkonstanten aufweisen. Bei der Herstellung des erfindungsgemäß verwendeten Sensors kann von einer standardmäßigen z.B. Glasfaser mit vorhandenem Cladding als Lichtwellenleiter ausgegangen werden. Es wird ein lokales Einbringen von Strukturen mit periodischer Indexmodulation, d.h. Bragg-Gittern, in den Randbereich des Kerns des Wellenleiters zur lokalen Störung der Modenfeldausbreitung des durch den Lichtwellenleiter geleiteten Lichtes vorgenommen. Derart ist eine sehr kostengünstige Herstellung des Sensors möglich. Die Bragg-Gitter können sowohl innerhalb des Faserkerns, als auch auf dessen Rand, als auch in der Nähe des Faserkerns im Cladding, im Bereich des evaneszenten Feldes des Wellenleiters z.B. durch Bestrahlung mit fokussiertem Laserlicht positioniert werden. Wenn mehrere Bereiche mit Bragg-Gittern entlang des Lichtwellenleiters vorgesehen sind, sind die entsprechenden Strukturen, d.h. mehrere sich in Axialrichtung überlappende Bragg-Gitter an verschiedenen Positionen längs des Lichtwellenleiters, z.B. einer Lichtleitfaser, eingebracht.

Vorteilhaft ist der innere Randbereich des Mantels in Radialrichtung weniger als zehn Prozent der Stärke des Mantels in den Mantel erstreckt. In diesen Bereich tritt noch eine ausreichende Intensität des Lichtes aus dem Kern ein um eine ausreichend starke Reflexion des Lichtes an einem dort positionierten Bragg-Gitter zu erhalten, um die Intensität der Reflexion nach Austritt aus dem Lichtwellenleiter gut messen zu können.

Wenn in dem Abschnitt drei oder vier durch die Querschnittsebene verlaufende Bragg-Gitter angeordnet sind, kann eine Krümmung des Lichtwellenleiters, z.B. einer Faser, auch bei vorhandenen Intensitätsverlusten im Lichtwellenleiter bestimmt werden. Aus jeder geometrischen Anordnung von mindestens drei verteilten Gitterstrukturen, d.h. Bragg-Gittern, kann Richtung und Amplitude der Faserkrümmung bestimmt werden. Bereits zwei Gitterstrukturen sind ausreichend, sofern eine zusätzliche Gesamtlichtintensitätsmessung erfolgt, bzw. keine Intensitätsverluste in der Faser auftreten.

Wenn eines der Bragg-Gitter zentral im Kern angeordnet ist und zwei der Bragg-Gitter im inneren Randbereich des Mantels angeordnet sind oder wenn die drei Bragg-Gitter im inneren Randbereich des Mantels angeordnet sind, lassen sich deren Positionen bei einer Krümmung des Lichtleiters durch Intensitätsmessung der daran erfolgten Lichtreflexionen besonders gut bestimmen.

Wenn in dem Abschnitt vier durch die Querschnittsebene verlaufende Bragg-Gitter angeordnet sind, wobei die vier Bragg-Gitter alle im inneren Randbereich des Mantels oder alle auf dem Rand des Kerns oder alle in einem äußeren Randbereich des Kerns angeordnet sind, ergibt sich eine Redundanz der Positionsbestimmung, so dass diese unter Ausgleich von Messungenauigkeiten exakter bestimmt werden kann.

Vorteilhaft ist dabei, wenn die Bragg-Gitter symmetrisch um das Zentrum des Kerns verteilt angeordnet sind, so dass die Orte in dem Lichtwellenleiter, deren Lage bestimmt wird, innerhalb des Lichtwellenleiters gleichmäßig verteilt sind.

Wenn die Bragg-Gitter einen maximalen Durchmesser kleiner als der halbe maximale Durchmesser des Kerns aufweisen, lässt sich deren Lage punktgenau bestimmen. Üblicherweise, d.h. insbesondere bei einem Lichtwellenleiter mit kreisförmigem Querschnitt, weisen die Bragg-Gitter eine elliptische Grundform auf. Die große Halbachse der Grundform verläuft dabei in Axialrichtung des Lichtwellenleiters senkrecht zu den Gitterstäben des Gitters.

Erfindungsgemäß weisen zumindest einige der Bragg-Gitter unterschiedliche Gitterkonstanten auf. Derart können unterschiedliche Wellenlängen des Lichtes im Lichtwellenleiter, d.h. deren Reflexionen an den Bragg-Gittern, gut getrennt ausgewertet werden.

Ein erfindungsgemäß verwendeter faseroptischer Sensor kann wie folgt hergestellt werden:
Bereitstellen eines Lichtwellenleiters, welcher eine in einer Lichtausbreitungsrichtung ausgerichtete Axialrichtung und eine senkrecht dazu ausgerichtete Radialrichtung aufweist, wobei der Lichtwellenleiter einen zentral in Axialrichtung verlaufenden, sich im Wesentlichen über die gesamte Länge des Lichtwellenleiters erstreckenden Kern zur Leitung von Licht und einen den Kern in Radialrichtung umgebenden Mantel aufweist, und
Einbringen von zumindest zwei, durch eine gemeinsame in Radialrichtung liegende Querschnittsebene durch den Lichtwellenleiter verlaufenden Bragg-Gittern in einen in Axialrichtung verlaufenden Abschnitt des Lichtwellenleiters durch Bestrahlung mit Laserlicht, insbesondere eines Femtosekundenlasers, durch Variation der Fokuslage des Laserlichtes, wobei
die Bragg-Gitter in den Kern und/oder auf der Grenze zwischen dem Kern und dem Mantel und/oder in einen inneren Randbereich des Mantels innerhalb eines Evaneszenzbereiches des Lichtes eingebracht werden.

Das Bragg-Gitter kann beispielsweise durch Materialmodifikation des Materials des Kerns mittels Laserstrahlung erzeugt werden. Die Laserstrahlung kann gepulst sein, beispielsweise mit einer Pulslänge von weniger als 10 ns, weniger als einer 1 ns oder im Falle eines Femtosekundenlasers weniger als 100 fs. Ferner kann das Bragg-Gitter durch Dotierung des Materials des Kerns erzeugt werden. In jedem Fall enthält das Bragg-Gitter eine Mehrzahl von räumlich umgrenzten Bereichen, deren Brechungsindex sich vom Brechungsindex des umgebenden Materials des Kerns unterscheidet. Somit wird an den jeweiligen Grenzflächen ein Teil des im Kern propagierenden Lichts reflektiert und ein Teil transmittiert. Mehrere solcher modifizierten Bereiche in vorgebbarem Abstand bilden ein Bragg-Gitter, welches in Abhängigkeit seiner Gitterkonstanten einen Wellenlängenbereich des einfallenden Lichtes reflektiert und Strahlung anderer Wellenlängenbereiche transmittiert. Bei Änderung der Temperatur oder beim Einwirken mechanischer Spannungen wird das Bragg-Gitter gedehnt oder gestaucht, so dass sich die Gitterkonstante ändert und durch spektroskopische Analyse des transmittierten oder reflektierten Lichtes bestimmbar ist. Das erfindungsgemäß verwendete Bragg-Gitter kann mit elliptischem Querschnitt durch Lasermaterialbearbeitung hergestellt werden. Hierbei kann die Laserstrahlung durch zumindest eine Zylinderlinse auf den Kern fokussiert werden. Da die Materialmodifikation durch die Laserstrahlung auf den Fokuspunkt des Laserstrahls begrenzt ist, ergibt sich bei einem elliptischen Fokus auch ein modifizierter Raumbereich mit der Form eines Rotationsellipsoides. Die Femtosekundenschreibtechnik eignet sich bevorzugt für eine präzise Positionierung der die Bragg-Gitter ausbildenden Indexstrukturen. Die Indexstrukturen werden dabei mittels Femtosekunden Laserpulsen in den Lichtwellenleiter eingebracht.

Das erfindungsgemäße Verfahren zur Bestimmung einer Krümmung und/oder Torsion, die. z.B. durch eine Temperaturschwankung hervorgerufen sein kann, des Lichtwellenleiters eines erfindungsgemäßen faseroptischen Sensors weist folgende Verfahrensschritte auf: Bereitstellung von Referenzdaten von Intensitäten von reflektierten Lichtanteilen von in den Lichtwellenleiter eingekoppeltem Licht in Abhängigkeit von bekannten Referenzverformungen des Lichtwellenleiters. Die Intensitätsdaten können dabei z.B. durch Messung und/oder durch Berechnung erstellt sein. Messung von mindestens einer Lichtintensität von reflektierten Lichtanteilen von in den Lichtwellenleiter eingekoppeltem Licht, wobei der Lichtwellenleiter eine zu bestimmende Verformung aufweist, und Bestimmung der Verformung durch Abgleich der Lichtintensität mit den Referenzdaten.

Es wird also eine Auswertung der von den die Bragg-Gitter ausbildenden Strukturen rückreflektierten Lichtintensitäten vorgenommen. Das erfindungsgemäße Messprinzip ist im Gegensatz zu Ansätzen aus dem Stand der Technik unabhängig von Wellenlängenänderungen, welche aufgrund von Dehnungen oder Temperaturänderungen der Gitterstrukturen entstehen. Demnach kann so zusätzlich zu der Formerfassung direkt eine Dehnung oder Temperaturerfassung mittels bekannter Auswerteverfahren von Bragg-Gitter Reflexionen vorgenommen werden. Auch die Auswertung einer Polarisationsabhängigkeit der Bragg-Gitter für eine Torsionsbestimmung des Lichtwellenleiters, z.B. gemäß der DE 102014211918 A1 ist unabhängig von einer Krümmungs- und Formerfassung möglich.

Wenn mindestens zwei reflektierte Lichtintensitäten gemessen werden, kann eine dreidimensionale Verformung durch Abgleich der Lichtintensitäten mit den Referenzdaten bestimmt werden. Bei der Bestimmung der Krümmung und/oder Torsion wird vorteilhaft eine Auswertung der Lichtintensitäten mittels eines Spektrometers und/oder AWG (Arrayed Waveguide Grading) Filterelementes und/oder FBG (Fiber Bragg Grading) Filterelementes vorgenommen.

Zur Bestimmung der Krümmung und/oder Torsion wird erfindungsgemäß ein Wellenlängenmultiplexing und/oder zeitaufgelöstes Multiplexing des in den Lichtwellenleiter eingekoppelten Lichtes vorgenommen wodurch sich Messsignale ergeben deren Fehler mittels statistischer Methoden bei der Bestimmung der Krümmung und/oder Torsion minimiert werden können. Es kann darüber hinaus bei der Bestimmung der Krümmung und/oder Torsion eine Auswertung der reflektierten Lichtintensitäten mittels eines Wellenlängenmultiplexing und/oder zeitaufgelösten Multiplexing vorgenommen werden.

Besondere Ausführungsformen der vorliegenden Erfindung werden nachfolgend bezugnehmend auf die beiliegenden Zeichnungen näher erläutert. Es zeigen:
Fig. 1 einen Längsschnitt durch einen faseroptischen Sensors in schematischer Darstellung,
Fig. 2a bis f verschiedene Anordnungen von Bragg-Gittern in einem Querschnitt eines faseroptischen Sensors in schematischer Darstellung, und
Fig. 3a und 3b eine Darstellung des dem erfindungsgemäßen Verfahren zur Bestimmung der Krümmung und/oder der Torsion des Lichtwellenleiters eines faseroptischen Sensors zugrundeliegenden Prinzips.

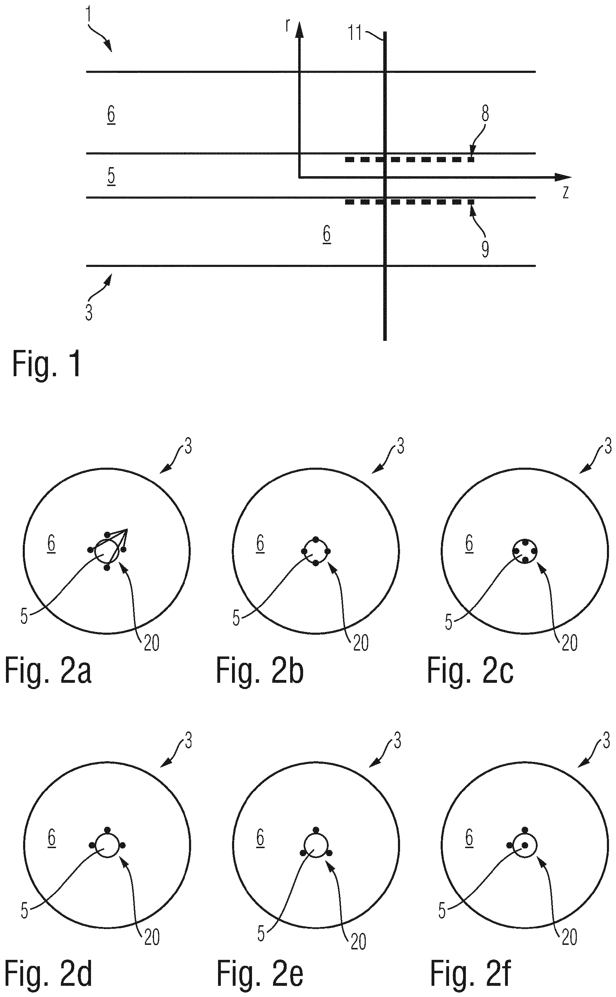

In Figur 1 ist ein Längsschnitt durch eine Ausführungsform eines faseroptischen Sensors 1 in schematischer Darstellung gezeigt. Der Längsschnitt verläuft in Axialrichtung z des Lichtwellenleiters 3 des Sensors 1, die die Lichtaus-breitungsrichtung von Licht im, z.B. aus einer Glasfaser gefertigten Kern 5 des Lichtwellenleiters 3 darstellt. Der Kern 5 verläuft zentral in Axialrichtung und erstreckt sich im Wesentlichen über die gesamte Länge des Lichtwellen-leiters 3. In Radialrichtung r, also senkrecht zu der Axialrichtung des Lichtwellenleiters 3, umgibt den Kern 5 ein Mantel 6, z.B. aus Kunststoff, zu dessen Schutz. Die Axialrichtung und die Radialrichtung sind als r-z Koordinatenachsen eingezeichnet.

In einem in Axialrichtung verlaufenden Abschnitt des Lichtwellenleiters sind zwei Bragg-Gitter (BG1 und BG2) 8,9 eingebracht. Es können auch in Axialrichtung des Lichtwellenleiters 3 mehrere voneinander beabstandete derartige Abschnitte mit Bragg-Gittern vorgesehen sein. Die voneinander beabstandeten Bragg-Gitter 8,9 verlaufen durch eine gemeinsame, in Radialrichtung liegende Querschnittsebene 11 durch den Lichtwellenleiter 3. Die Querschnittsebene 11 ist in der Figur als senkrechte Linie eingezeichnet, da sie senkrecht zur Zeichenebene verläuft. Da die Bragg-Gitter 8,9 den gleichen Durchmesser haben, überlappen sie sich in Axialrichtung vollständig. Eines der Bragg-Gitter 8 ist in einem äußeren Randbereich des Kerns 5 in dem Kern 5 eingebracht. Das andere Bragg-Gitter 9 ist in einem inneren Randbereich des Mantels 6 innerhalb des Evaneszenzbereiches des Lichtes, das bei Verwendung des Sensors 1 im Kern 5 geleitet wird, eingebracht. Die Gitterstäbe der Bragg-Gitter 8,9 verlaufen senkrecht zur Axialrichtung. Die Gitterstäbe müssen dabei keine wesentliche Längsausdehnung aufweisen. Sie können auch im Wesentlichen punktförmig sein. Sie liegen dann, wie dargestellt, auf einer Linie parallel zur Axialrichtung hintereinander aufgereiht.

Im Gegensatz zu bekannten als "superimposed" bezeichneten überlagerten Bragg-Gittern weisen die in den Lichtwellenleiter 3 eines erfindungsgemäßen faseroptischen Sensors 1 als Bragg-Gitter 8,9 eingebrachten Strukturen periodischer Brechzahlmodulation einen Unterschied in ihrer relativen Position zum Zentrum des Faserkerns 5 auf und haben einen deutlich kleineren Querschnitt (Punktdurchmesser) d.h. maximalen Durchmesser, als der Durchmesser des Kerns 5. Die Strukturen können sich hierbei sowohl in dem Faserkern 5 als auch insbesondere am Rand bzw. im angrenzenden Umgebungsmaterial des Mantels (Cladding Material) 6 im Bereich der evaneszenten Wechselwirkung des Lichtes, d.h. im Evaneszenzbereich, im Lichtwellenleiter 3 befinden. In der Figur ist ein Beispiel der Lage der periodischen Indexmodulation, also der Bragg-Gitter 8,9, in Randbereichen des Faserkerns 5 und im Cladding Material 6 gezeigt.

In den Figuren 2a bis 2f sind verschiedene Anordnungen von Bragg-Gittern in jeweils einer Querschnittsebene durch einen Abschnitt des Lichtwellenleiters 3 eines erfindungsgemäßen faseroptischen Sensors in schematischer Darstellung gezeigt. Die Querschnittsebenen fallen mit der Zeichenebene zusammen, weshalb sie lediglich durch den kreisförmigen Umfang des Lichtwellenleiters 3 dargestellt sind. Es sind Beispiele möglicher geometrischer Anordnungen von periodischen Indexstrukturen, d.h. Bragg-Gittern 20, insbesondere am Modenfeldrand zu einer guten 3D-Formbestimmung des Lichtwellenleiters 3, d.h. dessen Verformung, gezeigt. Die Querschnittsebenen liegen jeweils in Radialrichtung des Lichtwellenleiters 3, d.h. ihre Flächennormalen verlaufen jeweils in Richtung der Axialrichtung des Lichtwellenleiters 3. Die symbolisch als Punkte dargestellten Bragg-Gitter 20 verlaufen alle durch die Querschnittsebene des zugehörigen Lichtwellenleiters 3. D.h. sie liegen auf den Querschnittsebenen. Die Bragg-Gitter 20 weisen einen maximalen Durchmesser kleiner als der halbe maximale Durchmesser des Kerns 5 auf.

In den Figuren 2d bis 2f sind in dem jeweiligen Abschnitt jeweils drei durch die Querschnittsebene verlaufende Bragg-Gitter 20 angeordnet. In den Figuren 2d und 2e sind die drei Bragg-Gitter 20 im inneren Randbereich des Mantels 6 angeordnet, wobei diese in Figur 2e symmetrisch um das Zentrum des Kerns 5 verteilt sind. In Figur 2f ist eines der Bragg-Gitter 20 zentral im Kern 5 angeordnet und zwei der Bragg-Gitter 20 sind im inneren Randbereich des Mantels 6 angeordnet.

In den Figuren 2a bis 2c sind in dem jeweiligen Abschnitt vier durch die Querschnittsebene verlaufende Bragg-Gitter 20 angeordnet. In Figur 2a sind die vier Bragg-Gitter 20 alle im inneren Randbereich des Mantels 6 angeordnet. In Figur 2b sind alle Bragg-Gitter 20 auf dem Rand des Kerns 5 angeordnet, wogegen in Figur 2c alle Bragg-Gitter 20 in einem äußeren Randbereich des Kerns 5 angeordnet sind. Die vier Bragg-Gitter 20 sind jeweils symmetrisch um das Zentrum des Kerns 5 verteilt angeordnet.

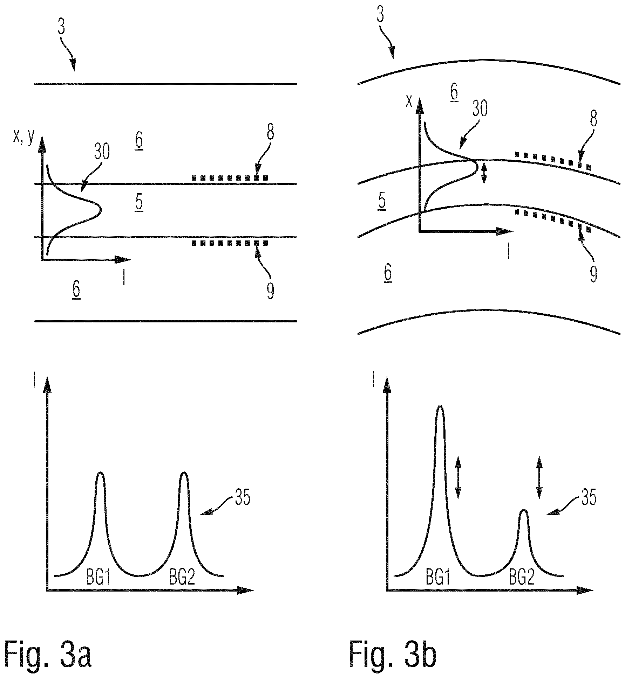

In den Figuren 3a und 3b ist das dem erfindungsgemäßen Verfahren zur Bestimmung einer Verformung, d.h. einer Krümmung und/oder Torsion, des Lichtwellenleiters 3 eines faseroptischen Sensors zugrundeliegenden Prinzips gezeigt. In Figur 3a ist ein Lichtwellenleiter 3 eines faseroptischen Sensors mit zwei Bragg-Gittern 8,9 unverformt, d.h. gerade verlaufend, dargestellt. In Figur 3b ist dieser gekrümmt dargestellt. In den Lichtwellenleiter 3 ist jeweils die Intensitätsverteilung I (Mode Field Intensity distribution) des zur Verformungsbestimmung eingebrachten Lichtes in Form dessen räumlicher Modenfeldverteilung dargestellt. Die Intensitätsverteilung entspricht einer Gauß-Verteilung 30, welche in einem gekippten x-y Koordinatensystem eingezeichnet ist. In dem unverformten Lichtwellenleiter 3 ist die Gauß-Verteilung 30 um das Zentrum des Kerns 5 gleichmäßig verteilt, wogegen bei gekrümmtem Wellenleiter die Gauß-Verteilung 30 in Radialrichtung verschoben ist, somit weiter in den Mantel 6 des Lichtwellenleiters hineinreicht.

Im unteren Bereich der Figuren ist jeweils die Lichtintensitäten 35 (Intensitätssignal) nach Wechselwirkung eines spektral breitbandigen Lichtfeldes mit einem als periodische Indexmodulation ausgebildeten Bragg-Gitter am Rand des Modenfeldes, also die Intensität jeweils eines reflektierten Spektrums, dargestellt. Dabei ist erkennbar wie sich das Intensitätssignal 35 bei einer dargestellten Biegung des Lichtwellenleiters 3 verändert. Für eine Struktur mit periodischer Indexmodulation, d.h. einem Bragg-Gitter, an einem bestimmten Ort relativ zum Zentrum des Kerns eines Lichtwellenleiters (Faserkernmittelpunkt) verändert sich bei einer Verlagerung des Modenfeldes die Intensität (I) des rückreflektierten Lichtes, wenn es mit der Struktur wechselwirkt. Dies führt zu einer Veränderung der von dem Bragg-Gitter reflektierten Lichtintensität, welche detektiert werden kann, bzw. zur Verformungsmessung wird. Man erkennt, dass sich die Intensität des reflektierten Lichtes 35 der einzelnen Bragg-Gitter 8,9 durch die Krümmung verändert hat. Insbesondere ist zu dem in der Figur oberen Bragg-Gitter (BG1) 8 zugehörige Intensität größer geworden und die dem in der Figur unteren Bragg-Gitter (BG2) 9 zugehörige Intensität geringer geworden.

Aus mehreren Intensitätssignalen 35 von der gleichen Position des Wellenleiters kann die Verlagerung des Modenfeldes und hieraus die lokale Krümmung der Faser errechnet werden. Eine Interpolation vieler solcher Mess-Stellen erlaubt eine vollständige Rekonstruktion der dreidimensionalen Form der Faser und damit des Lichtwellenleiters im Raum. Entsprechende Effekte treten auch bei Torsion und Dehnung des Lichtwellenleiters auf und werden zu deren Bestimmung ausgewertet.

Auf den dargestellten Intensitätsverschiebungen des an den Bragg-Gittern reflektierten Lichtes beruhend umfasst das erfindungsgemäße Verfahren zur Bestimmung der Krümmung und/oder Torsion des Lichtwellenleiters eines faseroptischen Sensors folgende Verfahrensschritte: Bereitstellung von Referenzdaten (Kalibrationsparameter) von Intensitäten von reflektierten Lichtanteilen (Amplitudensignale) von in den Lichtwellenleiter eingekoppeltem Licht, insbesondere in Abhängigkeit von bekannten Referenzverformungen des Lichtwellenleiters, Messung von mindestens einer Lichtintensität von reflektierten Lichtanteilen von in den Lichtwellenleiter eingekoppeltem Licht, wobei der Lichtwellenleiter eine zu bestimmende Verformung aufweist, und Bestimmung der Verformung, d.h. Auswertung der Lichtintensitäten der reflektierten Lichtanteile, durch Abgleich der Lichtintensität mit den Referenzdaten. Die Referenzdaten können dabei z.B. mittels Simulation berechnet oder auch gemessen sein. Die reflektierten Lichtanteile, d.h. deren Lichtintensitäten, sind zur Bestimmung der Verformung besonders gut auswertbar, wenn die Bragg-Gitter in einer geometrischen Anordnung gemäß den Figuren 2 in den Lichtwellenleiter eingebracht sind.

Eine mögliche Auswertung von Amplitudensignalen des faseroptischen Sensors basiert auf dem Vergleich der jeweils aktuellen Amplitudenverhältnisse aller an einer Messebene beteiligten Sensoren, d.h. Bragg-Gitter, mit den Kalibrationsparametern, die den Amplitudenverhältnissen des nicht gekrümmten Sensors entsprechen.

Die Bestimmung der Amplitudensignale, d.h. deren Höhe, kann über alle bekannten Auswerteverfahren von Bragg-Gittern realisiert werden, z.B. gewöhnliche spektrometerbasierte FBG-Auswerteeinheiten, Arrayed-Waveguide-Grading (AWG) Systeme, durchstimmbare Laserdioden, laufzeitselektive Interrogatoren in der Frequenz bzw. Zeitdomäne, oder auch mit weiteren Bragg-Gittern. Sie kann sowohl über das Messen eines absoluten Wertes oder eine mathematische Funktionsanpassung an das Rohdatensignal erfolgen.

Jedes mögliche Verhältnis von Bragg-Gittern einer Messebene, d.h. Bragg-Gittern auf einer Querschnittsebene des Lichtwellenleiters, kann genau einer Verschiebung des zugehörigen Modenfeldes zugeordnet werden. Mit faseroptischen Sensoren mit vier orthogonalen Gittern, wie z.B. in den Figuren 2d bis f dargestellt, können auf diese Weise direkt Krümmungen des Lichtwellenleiters in beide Raumrichtungen getrennt voneinander bestimmt werden.

Allgemeiner kann unter der Annahme der mathematischen Modenfeldbeschreibung eines nicht gekrümmten Wellenleiters für drei in einer beliebigen zweidimensionalen Anordnung positionierte Gitter über geometrische und auch numerische Verfahren eine eindeutige Verschiebung bestimmt werden, welche den real gemessenen relativen Intensitäten der drei Gitter entspricht. Anstatt eines statischen Modells für die Intensitätsverteilung des Lichtes im Faserkern können auch für verschiedene Krümmungen simulierte, d.h. berechnete, Modenfelder als Referenzdaten hinterlegt werden, welche je nach Radius der Krümmung eine gewisse Verzerrung der Intensitätsverteilung aufweisen. Dies in Kombination mit numerischen Lösungsverfahren verspricht hierbei die größtmögliche Genauigkeit der Umrechnung von gemessenen Signalamplituden in die zu bestimmende Verformung, z.B. Krümmung.

Im Folgenden wird beispielhaft das erfindungsgemäße Verfahren mit 3 oder 4 überlagerten FBG an verschiedenen, hier rechtwinklig zueinander ausgerichteten, Positionen des Faserkerns beschrieben, um eine Krümmung zu bestimmen: (In der folgenden Beschreibung ist die Z-Achse die Ausbreitrichtung des Lichtes, die X- und Y-Achse demnach die Aufsicht auf den Querschnitt der Faser)
1. Die Intensitätsverteilung des Modenfeldes für die gegebenen Glasfaserparameter (Kerndurchmesser, Brechzahl, Numerische Apertur der Faser) kann durch eine Normalverteilung angenähert werden. Dies kann auch durch ein beliebiges präziseres mathematisches Modell erfolgen.
2. Aufgrund der Sensorfertigung sind die relativen Positionen der eingesetzten Bragg-Gitter zueinander und zum Faserkernmittelpunkt bekannt (typischerweise am Rand des Faserkerns, beispielsweise 2,2µm vom Zentrum entfernt). Der Einfachheit halber werden im Folgenden zwei Bragg-Gitter an gegenüberliegenden Positionen zum Faserkern auf der X-Achse betrachtet und das oder die weiteren Bragg-Gitter senkrecht dazu direkt auf der Y-Achse
   (Koordinaten: Bragg-Gitter 1: (2,2µm, 0µm), Bragg-Gitter 2: (-2,2µm, 0µm), Bragg-Gitter 3: (0µm, 2,2µm) und Bragg-Gitter 4: (0µm, -2,2µm))
3. Die gemessenen (und prozessbedingt sich unterscheidenden) Amplituden aller Gitter werden für eine nicht gekrümmte Faser auf die Intensität normiert, welche an ihrer räumlichen Position das perfekt zentrierte Modenfeld aufweist. Diese Normierung stellt eine Kalibrationskonstante dar.
4. Das Intensitätsverhältnis zwischen den ersten beiden Bragg-Gittern entspricht einer (entlang der X-Achse) nicht gekrümmten Faser. Wird die Faser gebogen, verändert sich das Intensitätsverhältnis zwischen den beiden gegenüberliegenden Bragg-Gittern.
5. Es kann bestimmt werden, wie weit sich das Modenfeld in X-Richtung verlagert haben muss damit es zu dem neuen Amplitudenverhältnis kommen kann.

Für eine Auswertung von 4 Bragg-Gittern an jeder Messstelle:
6. Sind auch auf der Y-Achse 2 Bragg-Gitter gegenüber vorhanden, lässt sich dieses Verfahren direkt auch für die Y-Achse durchführen

Für eine Auswertung von 3 Bragg-Gittern an jeder Messstelle (Vorteilhaft aufgrund der geringeren Anzahl an benötigten Bragg-Gittern):
7. Die zu erwartende Intensität an der Position X = 0 (also auf der Y-Achse) wird für das in Punkt 5 bestimmte verlagerte Modenfeld entlang der X-Achse abgeleitet. Diese Intensität wird als sozusagen virtuelle vierte Gitteramplitude genutzt.

8. Nun kann die Verlagerung des Modenfeldes auch auf der Y-Achse zwischen dem dritten Bragg-Gitter und dem neuen virtuellen Bragg-Gitter analog zu vorstehenden Punkten 4. und 5. bestimmt werden.

Damit kann sowohl die Richtung als auch die Stärke der Modenfeldverlagerung bestimmt werden.

Über ein geeignetes Umrechnungsmodell (im einfachsten Fall eine antiproportionale Abhängigkeit) ergibt sich direkt die Krümmungsrichtung und der Radius der Biegung der Glasfaser.

Mehrere solcher Krümmungsmessebenen entlang einer Glasfaser erlauben die vollständige 3D-Form-Rekonstruktion.

Vorteilhaft ist es, wenn im erfindungsgemäßen Verfahren Folgendes eingesetzt wird:
- das Einschreiben von zumindest 3 Bragg Gittern an verschiedenen relativen Positionen zu einem Einmoden-Wellenleiter,
- ein Auswertesystem, welches Intensitäten von zumindest 3 Bragg-Gittern verschiedener Wellenlängen auswerten und unterscheiden kann,
- ein Algorithmus (wie der oben beschriebene) zur Bestimmung der Verlagerung des Modenfeldes aus zumindest 3 relativen Intensitäten der Bragg-Gitter, und
- evtl. die Bestimmung der Normierungskonstante, welche für eine nicht gekrümmte Faser das zufällige und herstellungsbedingte Amplitudenverhältnis der Bragg-Gitter auf die Intensitäten des Modenfeldes an den jeweiligen räumlichen Position der Bragg-Gitter korrigiert.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Verfahren zur Bestimmung einer Krümmung und/oder Torsion eines Lichtwellenleiters (3) eines faseroptischen Sensors (1) mit einem eine in einer Lichtaus-breitungsrichtung ausgerichtete Axialrichtung und eine senkrecht dazu ausgerichtete Radialrichtung aufweisenden Lichtwellenleiter (3), wobei der Lichtwellenleiter (3) einen zentral in Axialrichtung verlaufenden sich zumindest im Wesentlichen über die gesamte Länge des Lichtwellen-leiters (3) erstreckenden Kern (5) zur Leitung von Licht und einen den Kern (5) in Radialrichtung umgebenden Mantel (6) aufweist und wobei mindestens ein in Axialrichtung verlaufender Abschnitt des Lichtwellenleiters (3) mit mindestens zwei darin eingebrachten durch eine gemeinsame in Radialrichtung liegende Querschnittsebene (11) durch den Lichtwellenleiter (3) verlaufenden Bragg-Gittern (8, 9, 20) vorhanden ist, wobei die Bragg-Gitter (8, 9, 20) in dem Kern (5) und/oder auf der Grenze zwischen dem Kern (5) und dem Mantel (6) und/oder in einem inneren Randbereich des Mantels (6) innerhalb eines Evaneszenzbereiches des Lichtes eingebracht sind, und wobei zumindest einige der Bragg-Gitter (8, 9, 20) unterschiedliche Gitterkonstanten aufweisen, mit den Verfahrensschritten:
(a) Bereitstellung von Referenzdaten von Intensitäten von reflektierten Lichtanteilen von in den Lichtwellenleiter (3) eingekoppeltem Licht,
(b) Messung von mindestens einer Lichtintensität (35) von reflektierten Lichtanteilen von in den Lichtwellenleiter (3) eingekoppeltem Licht, wobei der Lichtwellenleiter (3) eine zu bestimmende Verformung aufweist, und
(c) Bestimmung der Verformung durch Abgleich der Lichtintensität (35) mit den Referenzdaten, wobei ein Wellenlängenmultiplexing und/oder ein Zeitmultiplexing des in den Lichtwellenleiter eingekoppelten Lichts durchgeführt wird, um die Verformung zu bestimmen.

2. Verfahren nach Anspruch 1, wobei sich der innere Randbereich des Mantels (6) in Radialrichtung weniger als zehn Prozent der Stärke des Mantels (6) in den Mantel (6) erstreckt.

3. Verfahren nach Anspruch 1 oder 2, wobei in dem Abschnitt drei durch die Querschnittsebene (11) verlaufende Bragg-Gitter (8, 9, 20) angeordnet sind.

4. Verfahren nach Anspruch 3, wobei eines der Bragg-Gitter (8, 9, 20) zentral im Kern (5) angeordnet ist und zwei der Bragg-Gitter (8, 9, 20) im inneren Randbereich des Mantels (6) angeordnet sind oder dass die drei Bragg-Gitter (8, 9, 20) im inneren Randbereich des Mantels (6) angeordnet sind.

5. Verfahren nach einem der Ansprüche 1 oder 2, wobei in dem Abschnitt vier durch die Querschnittsebene (11) verlaufende Bragg-Gitter (8, 9, 20) angeordnet sind, insbesondere wobei die vier Bragg-Gitter (8, 9, 20) alle im inneren Randbereich des Mantels (6) oder alle auf dem Rand des Kerns (5) oder alle in einem äußeren Randbereich des Kerns (5) angeordnet sind.

6. Verfahren nach einem der Ansprüche 1 bis 5, wobei die Bragg-Gitter (8, 9, 20) symmetrisch um das Zentrum des Kerns (5) verteilt angeordnet sind.

7. Verfahren nach einem der Ansprüche 1 bis 6, wobei die Bragg-Gitter (8, 9, 20) einen maximalen Durchmesser kleiner als der halbe maximale Durchmesser des Kerns (5) aufweisen.

8. Verfahren nach einem der Ansprüche 1 bis 7, wobei mindestens zwei Lichtintensitäten (35) gemessen werden, wobei eine dreidimensionale Verformung durch Abgleich der Lichtintensitäten (35) mit den Referenzdaten bestimmt wird.

9. Verfahren nach einem der Ansprüche 1 bis 8, wobei bei der Bestimmung der Verformung eine Auswertung der Lichtintensitäten (35) mittels eines Spektrometers und/oder AWG Filterelementes und/oder FBG Filterelementes vorgenommen wird.

10. Verfahren nach einem der Ansprüche 1 bis 9, wobei das Bereitstellen von Referenzdaten von Intensitäten von reflektierten Lichtanteilen von in den Lichtwellenleitern (39 eingekoppeltem Licht in Abhängigkeit von bekannten Referenzverformungen des Lichtwellenleiters erfolgt.

## Claims

1. Method for determining a curvature and/or torsion of an optical waveguide (3) of a fiber-optic sensor (1) with an optical waveguide (3) having an axial direction aligned in a direction of light propagation and a radial direction aligned perpendicular thereto, wherein the optical waveguide (3) hasa core (5) forconducting light, which core runscentrally in the axial direction and extendsat least substantially overthe entire length of the optical waveguide (3), and a cladding (6) surrounding the core (5) in the radial direction, and wherein at least one section of the optical waveguide (3), which runsin the axial direction, isprovided with at least two Bragg gratings (8, 9, 20), which are introduced therein and run through a common cross-sectional plane (11) through the optical waveguide (3), which cross-sectional plane liesin the radial direction, wherein the Bragg gratings(8, 9, 20) are introduced into the core (5) and/oron the boundary between the core (5) and the cladding (6) and/or in an inneredge region of the cladding (6) within an evanescent region of the light, and wherein at least some of the Bragg gratings(8, 9, 20) have different grating constants, comprising the method stepsof:
(a) providing reference data of intensities of reflected light portions of light coupled into the optical waveguide (3),
(b) measuring at least one light intensity (35) of reflected light portions of light coupled into the optical waveguide (3), wherein the optical waveguide (3) hasa deformation to be determined, and
(c) determining the deformation by comparing the light intensity (35) with the reference data, wherein wavelength multiplexing and/or time multiplexing of the light coupled into the optical waveguide iscarried out to determine the deformation.

2. Method according to claim 1, wherein the inneredge region of the cladding (6) extendsinto the cladding (6) in the radial direction by lessthan ten percent of the thickness of the cladding (6).

3. Method according to claim 1 or 2, wherein three Bragg gratings(8, 9, 20) running through the cross-sectional plane (11) are arranged in the section.

4. Method according to claim 3, wherein one of the Bragg gratings(8, 9, 20) isarranged centrally in the core (5) and two of the Bragg gratings (8, 9, 20) are arranged in the inneredge region of the cladding (6) or the three Bragg gratings(8, 9, 20) are arranged in the inner edge region of the cladding (6).

5. Method according to any one of claims 1 or 2, wherein four Bragg gratings (8, 9, 20) running through the cross-sectional plane (11) are arranged in the section, in particular wherein the fourBragg gratings (8, 9, 20) are all arranged in the inneredge region of the cladding (6) or all on the edge of the core (5) or all in an outer edge region of the core (5).

6. Method according to any one of claims 1 to 5, wherein the Bragg gratings (8, 9, 20) are arranged in such a way that they are symmetrically distributed around the center of the core (5).

7. Method according to any one of claims 1 to 6, wherein the Bragg gratings(8, 9, 20) have a maximum diameterof less than half the maximum diameter of the core (5).

8. Method according to any one of claims 1 to 7, wherein at least two light intensities (35) are measured, wherein a three-dimensional deformation isdetermined by comparing the light intensities(35) with the reference data.

9. Method according to any one of the claims 1 to 8, wherein in determining the deformation, an evaluation of the light intensities(35) iscarried out by meansof a spectrometer and/or an AWG filter element and/or an FBG filter element.

10. Method according to any one of claims 1 to 9, wherein reference data of intensities of reflected light portions of light coupled into the opticalwaveguides(3) isprovided on the basisof known reference deformationsof the optical waveguide.

## Revendications

1. Procédé pour déterminer une courbure et/ou une torsion d'un guide d'ondes optiques (3) d'un capteur à fibres optiques (1) comprenant un guide d'ondes optiques (3) qui présente une direction axiale orientée dans une direction de propagation de la lumière et une direction radiale orientée perpendiculairement à celle-ci,
dans lequel le guide d'ondes optiques (3) présente un cœur (5) de conduction de la lumière, qui s'étend au centre dans la direction axiale et au moins sensiblement sur toute la longueur du guide d'ondes optiques (3), et une gaine (6) qui entoure le cœur (5) dans la direction radiale, et
il est prévu au moins une portion du guide d'ondes optiques (3), qui s'étend dans la direction axiale et qui comprend au moins deux réseaux de Bragg (8, 9, 10, 11) intégrés dans celle-ci et passant par un plan de section transversale (11) commun, situé dans la direction radiale, à travers le guide d'ondes optiques (3),
les réseaux de Bragg (8, 9, 20) sont intégrés dans le cœur (5) et/ou sur la limite entre le cœur (5) et la gaine (6) et/ou dans une zone de bord intérieure de la gaine (6) à l'intérieur d'une zone d'évanescence de la lumière, et
au moins certains des réseaux de Bragg (8, 9, 20) présentent des constantes de réseau différentes,
comprenant les étapes de procédé consistant à :
(a) mettre à disposition des données de référence d'intensités de parts de lumière réfléchies de la lumière injectée dans le guide d'ondes optiques (3),
(b) mesurer au moins une intensité lumineuse (35) de parts de lumière réfléchies de la lumière injectée dans le guide d'ondes optiques (3), le guide d'ondes optiques (3) présentant une déformation à déterminer, et
(c) déterminer la déformation par comparaison de l'intensité lumineuse (35) avec les données de référence,
un multiplexage en longueur d'onde et/ou un multiplexage temporel de la lumière injectée dans le guide d'ondes optiques étant effectué pour déterminer la déformation.

2. Procédé selon la revendication 1,
dans lequel la zone de bord intérieure de la gaine (6) s'étend en direction radiale dans la gaine (6) sur moins de dix pour cent de l'épaisseur de la gaine (6).

3. Procédé selon la revendication 1 ou 2,
dans lequel trois réseaux de Bragg (8, 9, 20) passant par le plan de section transversale (11) sont disposés dans ladite portion.

4. Procédé selon la revendication 3,
dans lequel l'un des réseaux de Bragg (8, 9, 20) est disposé au centre du cœur (5) et deux des réseaux de Bragg (8, 9, 20) sont disposés dans la zone de bord intérieure de la gaine (6), ou les trois réseaux de Bragg (8, 9, 20) sont disposés dans la zone de bord intérieure de la gaine (6).

5. Procédé selon l'une des revendications 1 ou 2,
dans lequel quatre réseaux de Bragg (8, 9, 20) passant par le plan de section transversale (11) sont disposés dans ladite portion,
en particulier, les quatre réseaux de Bragg (8, 9, 20) sont tous disposés dans la zone de bord intérieure de la gaine (6) ou sont tous disposés sur le bord du cœur (5) ou sont tous disposés dans une zone de bord extérieure du cœur (5).

6. Procédé selon l'une des revendications 1 à 5,
dans lequel les réseaux de Bragg (8, 9, 20) sont répartis symétriquement autour du centre du cœur (5).

7. Procédé selon l'une des revendications 1 à 6,
dans lequel les réseaux de Bragg (8, 9, 20) présentent un diamètre maximal inférieur à la moitié du diamètre maximal du cœur (5).

8. Procédé selon l'une des revendications 1 à 7,
dans lequel on mesure au moins deux intensités lumineuses (35), une déformation tridimensionnelle étant déterminée par comparaison des intensités lumineuses (35) avec les données de référence.

9. Procédé selon l'une des revendications 1 à 8,
dans lequel, lors de la détermination de la déformation, on procède à une évaluation des intensités lumineuses (35) au moyen d'un spectromètre et/ou d'un élément filtrant AWG et/ou d'un élément filtrant FBG.

10. Procédé selon l'une des revendications 1 à 9,
dans lequel la mise à disposition de données de référence d'intensités de parts de lumière réfléchies de la lumière injectée dans les guides d'ondes optiques (39) est effectuée en fonction de déformations de référence connues du guide d'ondes optiques.
